# FASCICULE DE BREVET EUROPEEN

(11) **EP 3 850 257 B1**
(45) Date de publication et mention de la délivrance du brevet: **28.06.2023**
(21) Numéro de dépôt: 19783086.2
(22) Date de dépôt: 12.09.2019
(51) Int. Cl.: F16L 19/025, F16L 19/02, G01L 5/24

(54) **RACCORD ÉTANCHE AUX FLUIDES**
FLUIDDICHTER VERBINDER
FLUID-TIGHT CONNECTOR

(30) Priorité: 13.09.2018 US 201862730689 P
(43) Date de publication de la demande: 21.07.2021
(73) Titulaire: JPB Système, 77950 Montereau sur le Jard (FR)
(72) Inventeur: MARC, Damien, 77115 Blandy (FR); MESSAGER, Denis, 77000 Melun (FR); BEAUMEL, Jonathan Alain, 77360 Vaires sur Marne (FR)
(74) Mandataire: Schlotter, Alexander Carolus Paul
(86) Numéro de dépôt international: PCT/FR2019/000143
(87) Numéro de publication internationale: WO 2020/053488

(56) Documents cités:
- EP-A1- 0 219 349
- US-A- 3 521 910
- US-A1- 2002 023 504
- US-A1- 2011 278 837
- US-A1- 2016 298 796

## Description

### Domaine technique

La présente invention concerne de manière générale les raccords étanches aux fluides et, plus particulièrement, un ensemble écrou amélioré à utiliser dans des raccords étanches aux fluides.

### Contexte

Les raccords étanches aux fluides sont couramment utilisés dans diverses applications où l'on souhaite coupler ensemble deux conduits destinés à la transmission d'un fluide entre eux. Un raccord étanche aux fluides classique inclut un écrou reçu sur un premier conduit et ayant des filets pour mettre en prise des filets correspondants ménagés sur un deuxième conduit, moyennant quoi un raccordement étanche aux fluides est formé par serrage par filet de l'écrou sur les filets du deuxième conduit. Un desserrement du raccordement fileté peut se produire pendant l'utilisation, tel que lorsque le joint est exposé à un mouvement, des vibrations, ou diverses autres forces dynamiques. En conséquence, on souhaite proposer un procédé simple visant à établir aisément si un joint étanche aux fluides donné est adéquatement raccordé.

Le document US 2002/023504 A1 divulgue un raccord pour fluide capable d'indiquer un serrage correct.

### Résumé

Un objet de la présente invention est de proposer un ensemble écrou pour un raccord étanche aux fluides, de préférence amélioré, d'un premier et d'un deuxième conduit. Ledit objet est résolu par un ensemble écrou selon la revendication 1, un ensemble étanche aux fluides selon la revendication 4, ou un procédé selon la revendication 5. Les sous-revendications se réfèrent à des modes de réalisation préférés.

Selon un mode de réalisation, la présente invention propose un ensemble étanche aux fluides amélioré destiné à raccorder des premier et deuxième conduits et qui facilite une détermination aisée d'un état sécurisé du raccord, également désigné configuration sécurisée. L'ensemble étanche aux fluides inclut respectivement un premier conduit ayant une première extrémité distale, un deuxième conduit ayant une première portion filetée, et un ensemble écrou selon l'invention, l'écrou étant reçu ou configuré pour être reçu sur la première extrémité du premier conduit et ayant une deuxième portion filetée configurée pour être mise en prise, en particulier étant mise en prise, avec la première portion filetée du deuxième conduit. L'indicateur visuel a un premier état dans lequel une portion indicatrice de l'indicateur visuel est hors de portée de vue par rapport à l'extérieur de l'écrou, et un deuxième état dans lequel la portion indicatrice de l'indicateur visuel est visible depuis l'extérieur de l'écrou lorsque l'ensemble est totalement serré.

« Totalement serré » au sens de la présente invention peut en particulier désigner un raccordement étanche aux fluides. Selon un mode de réalisation, l'ensemble n'est pas (totalement) serré ou n'est pas étanche aux fluides ou ne forme pas de raccordement étanche aux fluides respectivement lorsque l'indicateur visuel a le premier état ou que l'indicateur visuel a le premier état dans lequel la portion indicatrice de l'indicateur visuel est hors de portée de vue par rapport à l'extérieur de l'écrou lorsque l'ensemble n'est pas (totalement) serré ou n'est pas étanche aux fluides ou ne forme pas un raccordement étanche aux fluides respectivement ou est configuré en conséquence.

Le procédé d'inspection de l'ensemble étanche aux fluides, selon la revendication 5, comprend les étapes : de visualisation d'au moins une portion de l'extérieur de l'ensemble étanche aux fluides et d'identification de la présence ou de l'absence de l'indicateur visuel.

Les objets et avantages ci-dessus et autres de la présente invention apparaîtront dans les dessins annexés et dans la description de ceux-ci.

### Brève description des dessins

Les dessins annexés, qui sont incorporés dans et constituent une partie de ce mémoire, illustrent des exemples de modes de réalisation de l'invention et, conjointement avec une description générale de l'invention donnée ci-dessus, et la description détaillée donnée ci-dessous, servent à expliquer les principes de l'invention.
La figure 1 est une vue en perspective en éclaté d'un premier exemple de mode de réalisation d'un raccord étanche aux fluides en conformité avec les principes de la présente divulgation, comprenant un ensemble écrou selon l'invention.
La figure 2 est une vue en perspective du raccord assemblé de la figure 1 dans un premier état non serré.
La figure 3 est une vue en coupe du raccord de la figure 2 dans le premier état.
La figure 4 est une vue en perspective du raccord assemblé de la figure 1 dans un deuxième état totalement serré.
La figure 5 est une vue en coupe du raccord de la figure 4 dans le deuxième état.
La figure 6 est une vue en perspective en éclaté d'un deuxième exemple de mode de réalisation d'un raccord étanche aux fluides en conformité avec les principes de la présente divulgation, mais qui n'est pas couvert par les revendications.
La figure 7 est une vue en perspective du raccord assemblé de la figure 6 dans un premier état non serré.
La figure 8 est une vue en coupe du raccord de la figure 7 dans le premier état.
La figure 8A est une vue en coupe d'un mode de réalisation alternatif du raccord de la figure 7 dans le premier état, ce mode n'étant pas couvert par les revendications.
La figure 9 est une vue en perspective du raccord assemblé de la figure 6 dans un deuxième état totalement serré.
La figure 10 est une vue en coupe du raccord de la figure 9 dans le deuxième état.
La figure 10A est une vue en coupe du mode de réalisation alternatif du raccord de la figure 8A dans le deuxième état.
La figure 11 est une vue en perspective en éclaté d'un troisième exemple de mode de réalisation d'un raccord étanche aux fluides en conformité avec les principes de la présente divulgation, qui n'est pas couvert par les revendications.
La figure 12 est une vue en perspective du raccord assemblé de la figure 11 dans un premier état non serré.
La figure 13 est une vue en coupe du raccord de la figure 12 dans le premier état.
La figure 14 est une vue en perspective du raccord assemblé de la figure 11 dans un deuxième état totalement serré.
La figure 15 est une vue en coupe du raccord de la figure 14 dans le deuxième état.
La figure 16 est une vue en perspective en éclaté d'un quatrième exemple de mode de réalisation d'un raccord étanche aux fluides en conformité avec les principes de la présente divulgation, comprenant un ensemble écrou selon l'invention.
La figure 17 est une vue en perspective du raccord assemblé de la figure 16 dans un premier état non serré.
La figure 18 est une vue en coupe du raccord de la figure 17 dans le premier état.
La figure 19 est une vue en perspective du raccord assemblé de la figure 16 dans un deuxième état totalement serré.
La figure 20 est une vue en coupe du raccord de la figure 19 dans le deuxième état.
La figure 21 est une vue en perspective en éclaté d'un cinquième exemple de mode de réalisation d'un raccord étanche aux fluides en conformité avec les principes de la présente divulgation, qui n'est pas couvert par les revendications.
La figure 22 est une vue en perspective du raccord assemblé de la figure 21 dans un premier état non serré.
La figure 23 est une vue en coupe du raccord de la figure 22 dans le premier état.
La figure 24 est une vue en perspective du raccord assemblé de la figure 21 dans un deuxième état totalement serré.
La figure 25 est une vue en coupe du raccord de la figure 24 dans le deuxième état.
La figure 26 est une vue en perspective d'un exemple de mode de réalisation d'un écrou instrumenté à utiliser dans un raccord étanche aux fluides en conformité avec les principes de la présente divulgation, qui n'est pas couvert par les revendications.
La figure 27 est une vue en perspective d'un deuxième exemple de mode de réalisation d'un écrou instrumenté à utiliser dans un raccord étanche aux fluides en conformité avec les principes de la présente divulgation, qui n'est pas couvert par les revendications.
La figure 28 est une vue en perspective de l'écrou instrumenté de la figure 27, incluant un élément protecteur.
La figure 29 est une vue en perspective d'un troisième exemple de mode de réalisation d'un écrou instrumenté à utiliser dans un raccord étanche aux fluides en conformité avec les principes de la présente divulgation, qui n'est pas couvert par les revendications.
La figure 30 est une vue en perspective d'un quatrième exemple de mode de réalisation d'un écrou instrumenté à utiliser dans un raccord étanche aux fluides en conformité avec les principes de la présente divulgation, qui n'est pas couvert par les revendications.

### Description détaillée

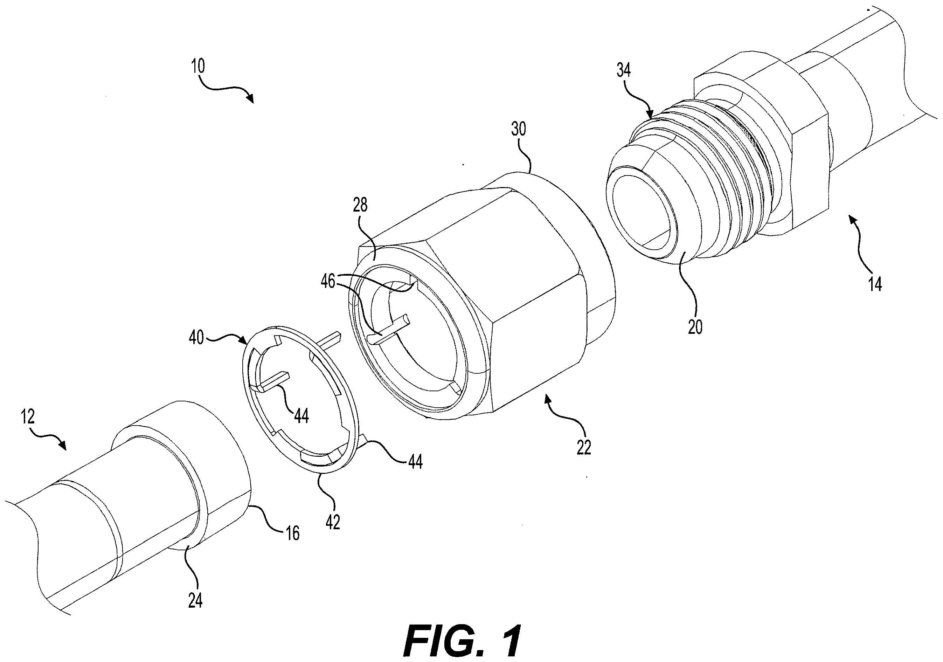

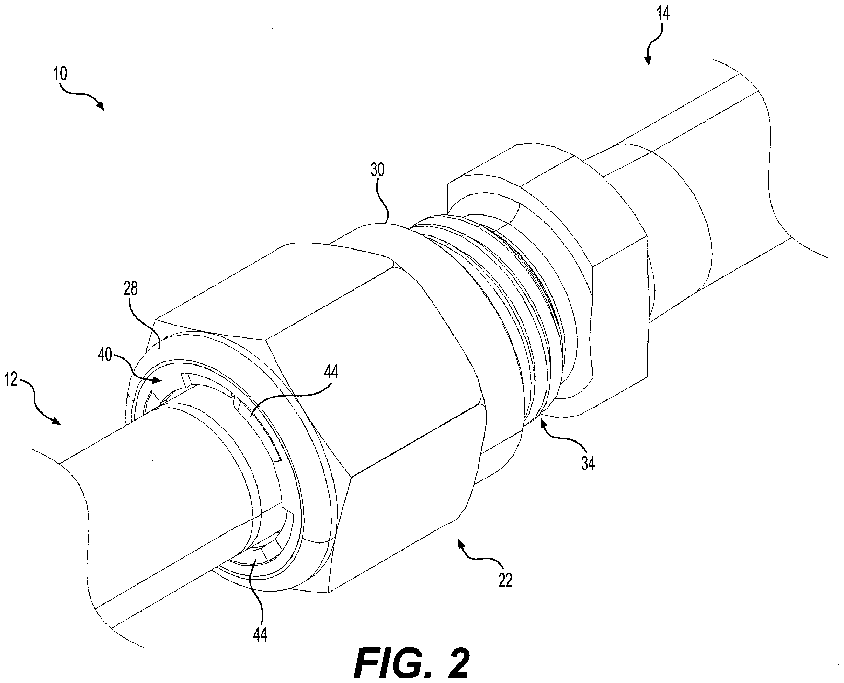

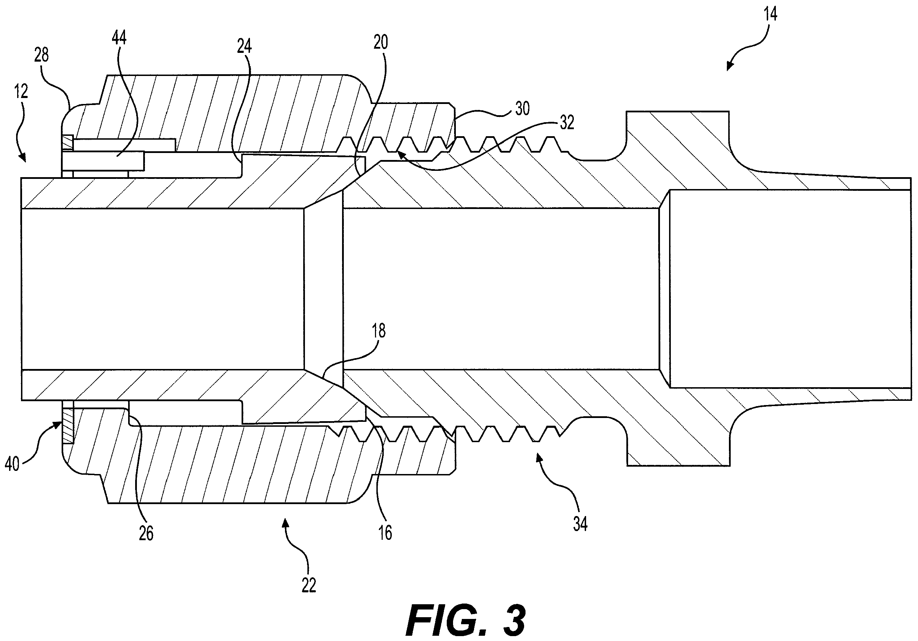

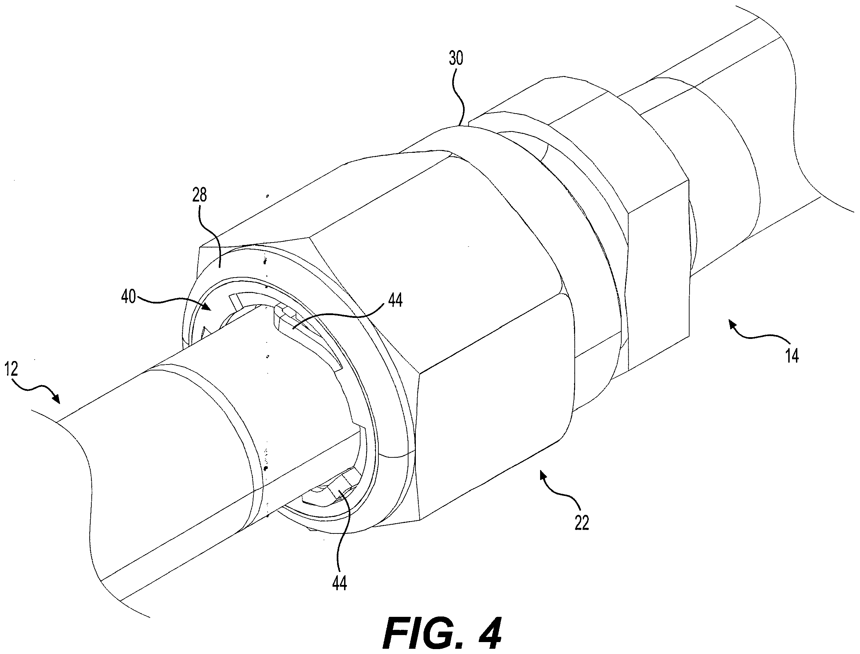

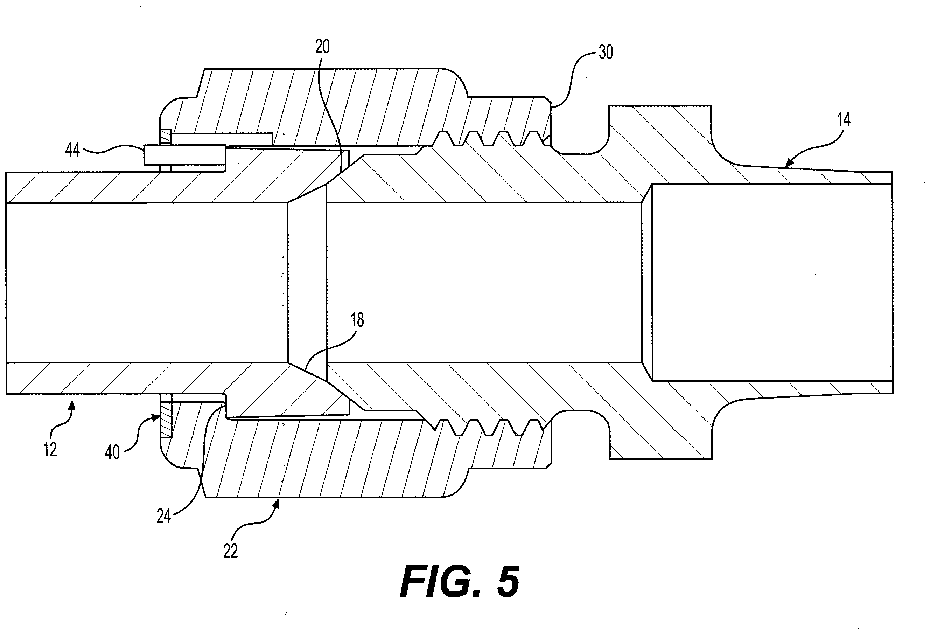

Les figures 1 à 5 schématisent un exemple d'accessoire étanche aux fluides 10 destiné à joindre des premier et deuxième conduits de fluide 12, 14 en conformité avec la présente divulgation. Le premier conduit 12 a une première extrémité distale 16 avec un diamètre interne coniquement évasé 18 qui met en prise une extrémité distale effilée en correspondance 20 du deuxième conduit 14 dans un état assemblé du raccord 10. Le premier conduit 12 s'étend à travers un écrou 22 et inclut un épaulement s'étendant radialement vers l'extérieur 24 qui met en prise un épaulement correspondant 26 disposé au sein du diamètre interne à une première extrémité distale 28 de l'écrou 22. La deuxième extrémité distale 30 de l'écrou 22 inclut des filets intérieurs 32 configurés pour mettre en prise des filets extérieurs correspondants 34 sur le deuxième conduit 14 lorsque le deuxième conduit 14 est reçu dans la deuxième extrémité 30 de l'écrou 22. L'écrou 22 est vissé par filet sur le deuxième conduit 14 vers un état serré dans laquelle l'épaulement s'étendant radialement vers l'extérieur 24 sur le premier conduit 12 vient au contact de l'épaulement interne 26 de l'écrou 22, et le diamètre interne évasé 18 du premier conduit 12 met en prise de manière étanche l'extrémité effilée 20 du deuxième conduit 14 pour créer un ensemble étanche aux fluides.

En référence continue aux figures 1 à 5, un premier mode de réalisation d'un exemple d'écrou 22 en conformité avec les principes de la présente divulgation sera décrit. L'écrou 22 inclut un indicateur visuel 40 reçu sur la première extrémité 28 de l'écrou 22 pour indiquer que l'accessoire étanche aux fluides 10 est sécurisé dans l'état serré. En conformité avec les principes de la présente divulgation, l'indicateur visuel 40 a un premier état dans lequel une portion indicatrice de l'indicateur visuel 40 est hors de portée de vue par rapport à l'extérieur de l'écrou 22 lorsque l'accessoire 10 n'est pas dans l'état serré, et un deuxième état dans lequel la portion indicatrice de l'indicateur visuel 40 est visible depuis l'extérieur de l'écrou 22 lorsque l'accessoire 10 est dans l'état totalement serré.

Dans ce mode de réalisation, l'indicateur visuel 40 comprend une bague annulaire 42 dimensionnée pour être reçue sur la première extrémité 28 de l'écrou 22 et au moins une patte 44 s'étendant axialement vers l'extérieur de la bague 42 pour être reçue au sein de l'intérieur de l'écrou 22. Comme montré et décrit ici, l'indicateur visuel 40 inclut trois pattes 44 pour faciliter une observation des pattes 44 depuis divers points de vue autour du raccord 10, néanmoins, il convient de comprendre que l'indicateur visuel 40 peut en variante n'avoir qu'une patte 44, ou peut avoir tout nombre de pattes 44 qu'on peut souhaiter pour faciliter une observation visuelle. Les surfaces internes de l'écrou 22 peuvent inclure une ou plusieurs fentes 46 dimensionnées pour recevoir les pattes 44 lorsque la bague 42 est reçue sur la première extrémité 28 de l'écrou 22. La bague 42 peut être assujettie à la première extrémité 28 de l'écrou 22 par tout procédé adéquat tel que par un adhésif, un raccord de frottement, un soudage, un verrouillage mutuel mécanique, ou par l'utilisation d'une bague de retenue, à titre d'exemples non limitants.

Au moins les pattes 44 de l'indicateur visuel 40 peuvent être formées d'une matière flexible de telle sorte que les pattes 44 peuvent être déviées dans la plage élastique de la matière sans déformation plastique significative ou fixation permanente afin de donner une indication visuelle d'un état totalement serré correcte du raccord 10. En utilisation, les pattes 44 viennent en contact avec l'épaulement 24 du premier conduit 12 à mesure que l'écrou 22 est vissé sur le deuxième conduit 14. A mesure que le vissage est poursuivi vers l'état serré du raccord 10, les pattes 44 commencent à dévier axialement le long des fentes 46 dans une direction vers la première extrémité 28 de l'écrou 22 jusqu'à ce que les pattes 44 soient finalement visibles lorsque l'accessoire 10 atteint l'état totalement serré. Au moins des portions des pattes 44 peuvent être pourvues d'une couleur contrastée ou d'un autre effet visuel pour faciliter une observation des pattes 44 dans le deuxième état. La couleur contrastée ou l'effet visuel peut être assuré par une peinture, une teinture, ou tout autre traitement adéquat qui facilite une observation visuelle des pattes 44 dans le deuxième état. La bague 42 et/ou les pattes 44 peuvent être formées de toute matière adéquate qui présente de bonnes caractéristiques de travail dans des environnements à haute température, tels que ceux que l'on peut connaître dans des applications aérospatiales, et qui permet aux pattes 44 de dévier sans déformation plastique significative. Dans un mode de réalisation, les pattes 44 et/ou la bague 42 peuvent être formées d'un alliage fer-nickel-chrome, tel qu'Inconel^{®}. La bague 42 et/ou les pattes 44 de l'indicateur visuel 40 dans ce mode de réalisation peuvent être formées par tout processus de fabrication adéquat. Dans un mode de réalisation, la bague 42 et/ou les pattes 44 peuvent être formées par des processus de découpe de fil et de cintrage, par exemple, pour obtenir la forme non déviée de l'indicateur visuel 40.

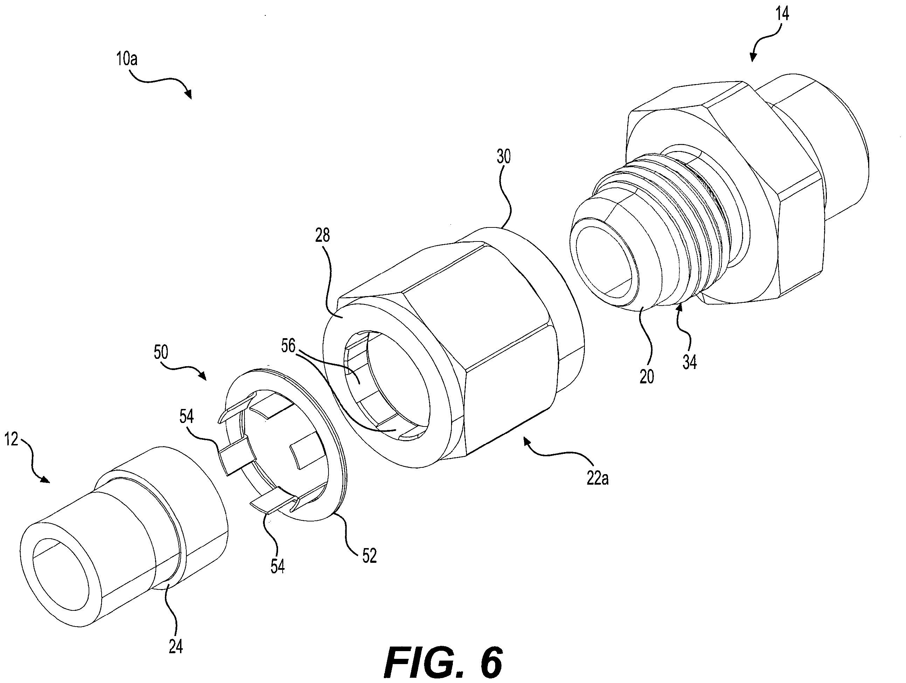

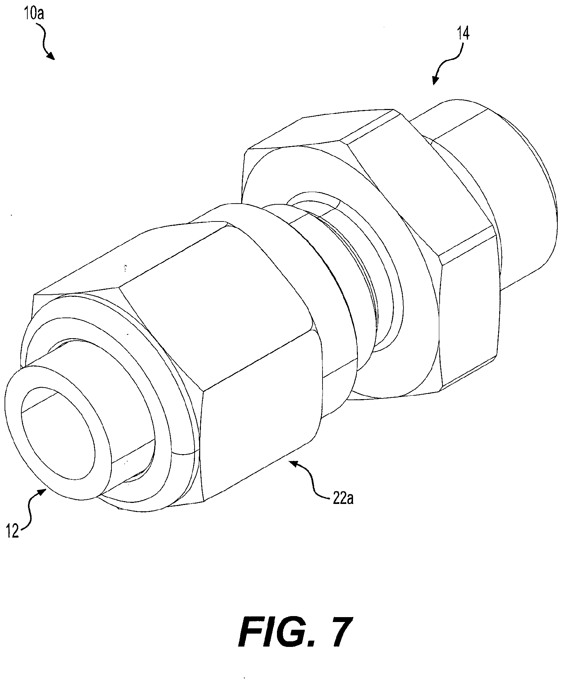

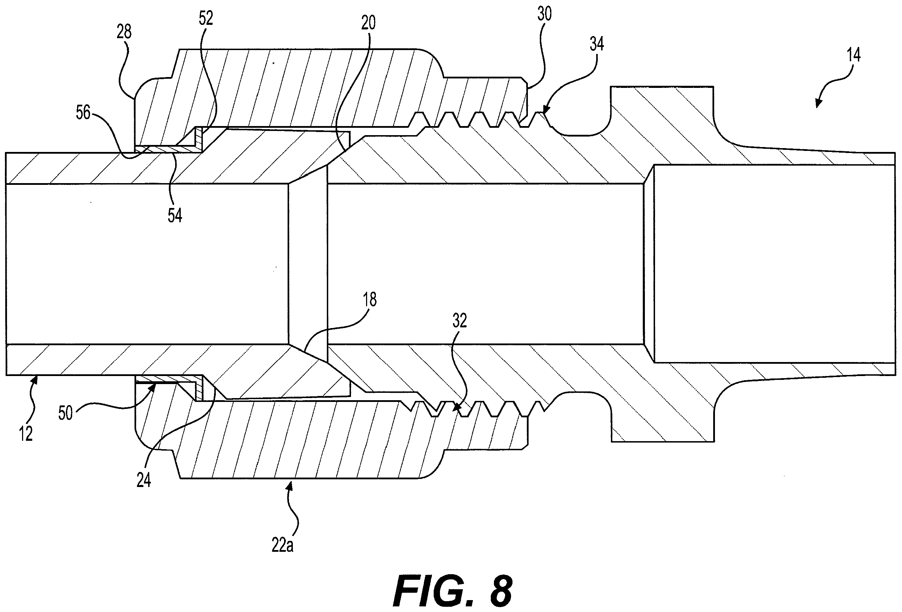

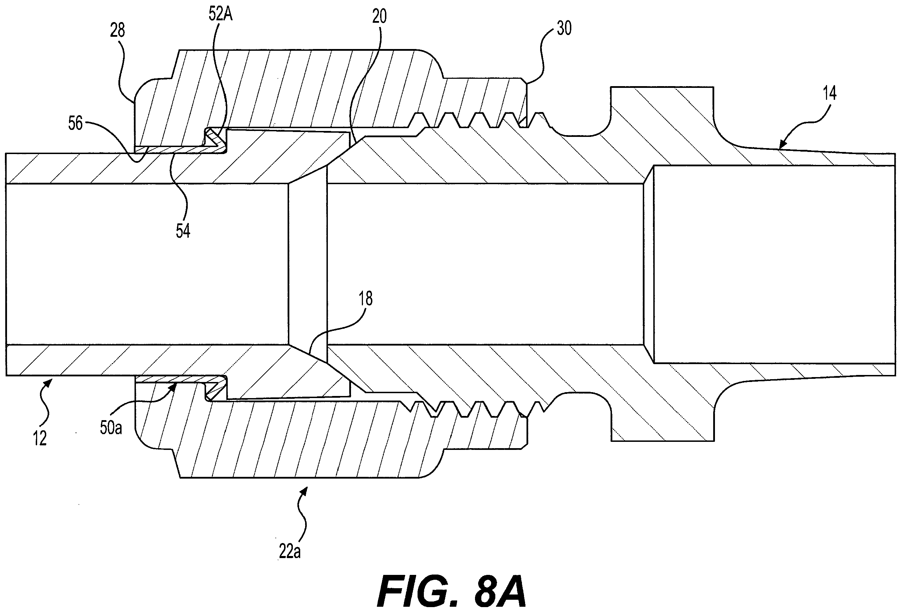

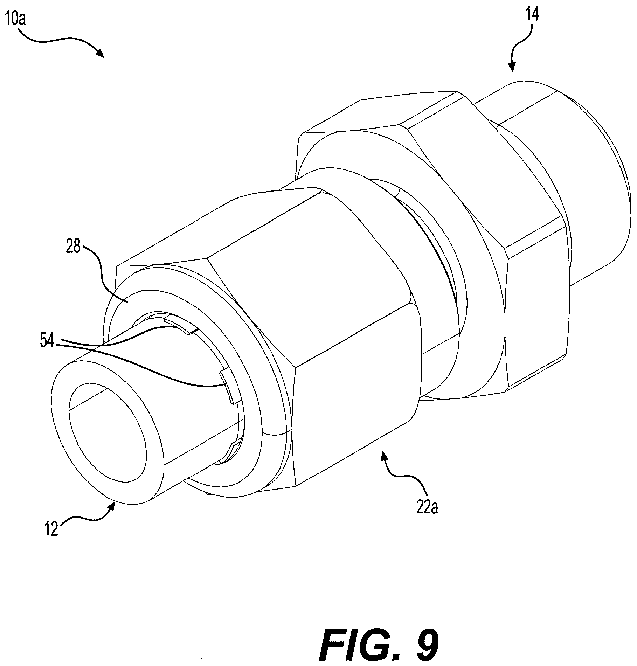

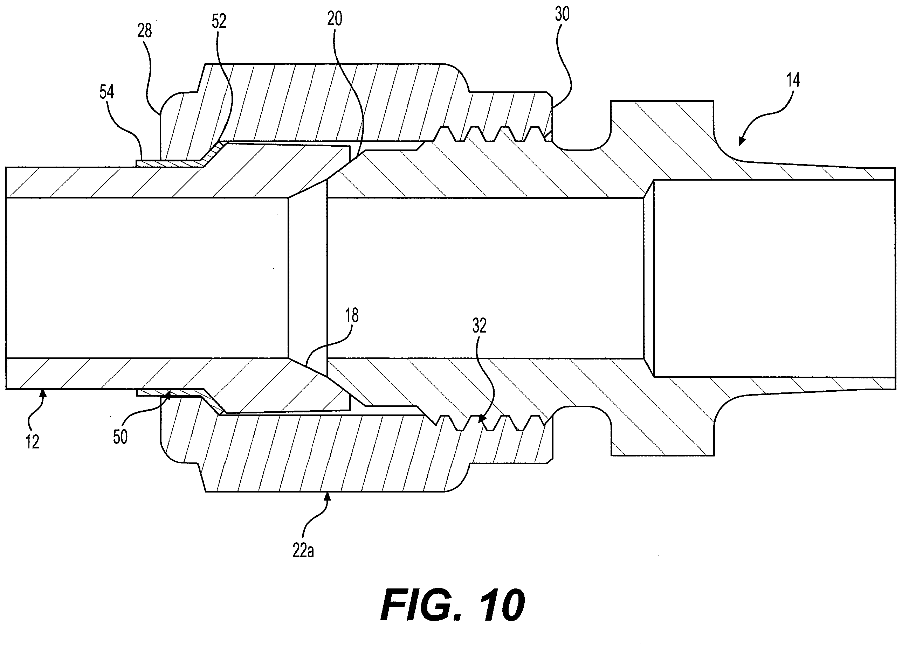

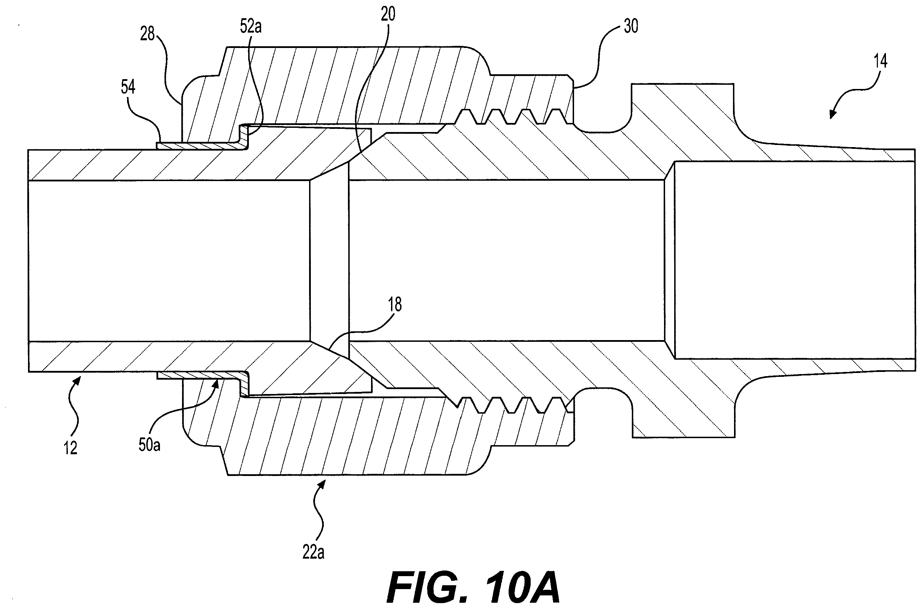

Un deuxième mode de réalisation d'un exemple d'accessoire 10a en conformité avec les principes de la présente divulgation est montré et décrit en référence aux figures 6 à 10, dans lesquelles des composants similaires au mode de réalisation décrit ci-dessus sont numérotés de façon similaire. Dans ce mode de réalisation, l'indicateur visuel 50 comprend une rondelle de ressort 52, 52a reçue au sein de l'intérieur de l'écrou 22a depuis la deuxième extrémité ouverte 30, et qui met en prise l'épaulement intérieur 26 à proximité de la première extrémité 28 de l'écrou 22a. Les figures 6, 8, et 10 illustrent un mode de réalisation dans lequel la rondelle de ressort 52 a une forme non déviée généralement plate, et les figures 8A et 10A illustrent un mode de réalisation alternatif d'indicateur visuel 50a dans lequel la rondelle de ressort 52a a une forme non déviée conique, telle qu'une rondelle Belleville. Dans l'une ou l'autre des configurations, une ou plusieurs pattes s'étendant axialement 54 sont ménagées à proximité du diamètre interne de la rondelle de ressort 52, 52a et s'étendent dans une direction vers la première extrémité distale 28 de l'écrou 22A. Une ou plusieurs fentes 56 peuvent être ménagées dans la surface interne de l'écrou 22a pour recevoir les une ou plusieurs pattes 54 de l'indicateur visuel 50, 50a. Durant l'assemblage du raccord 10a, l'épaulement s'étendant radialement vers l'extérieur 24 du premier conduit 12 commence à mettre en prise la rondelle de ressort 52, 52a à mesure que l'écrou 22a est vissé sur le deuxième conduit 14 dans une direction vers l'état serré du raccord 10a, comme schématisé sur les figures 7, 8, et 8A. A mesure que la rondelle de ressort dévie par mise en prise avec le premier conduit 12, les pattes 54 se déplacent axialement le long des fentes 56 vers la première extrémité ouverte 28 de l'écrou 22a jusqu'à ce que les extrémités distales des pattes 54 deviennent visibles en vue depuis l'extérieur de l'écrou 22a dans l'état totalement serré du raccord 10a, comme schématisé sur les figures 9, 10, et 10A.

La rondelle de ressort 52, 52a peut être formée de toute matière adéquate qui présente de bonnes caractéristiques de travail dans des environnements à haute température, tels que ceux que l'on peut connaître dans des applications aérospatiales, et qui permet à la rondelle de ressort 52, 52a de dévier vers le deuxième état sans déformation plastique significative. Les pattes 54 de l'indicateur visuel 50, 50a peuvent inclure une couleur contrastée ou un effet visuel ménagé sur au moins une portion de celles-ci pour faciliter une observation visuelle aisée dans le deuxième état serré du raccord 10a. Comme évoqué ci-dessus, une telle couleur contrastée ou un tel effet visuel adéquat peut être assuré par peinture, teinture, ou tout autre traitement adéquat de la matière qui facilite une observation visuelle.

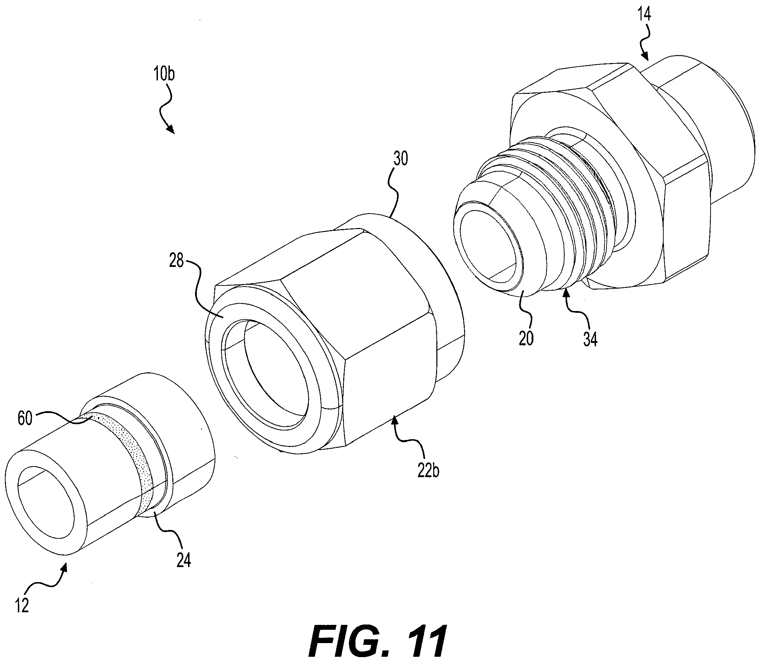

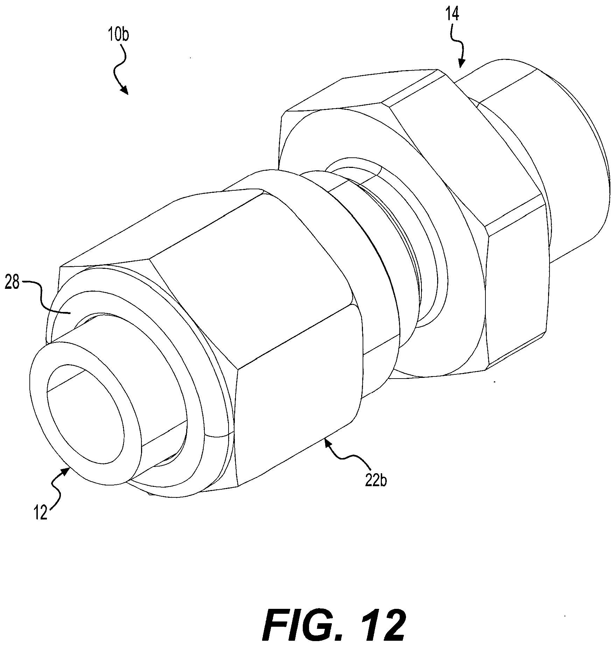

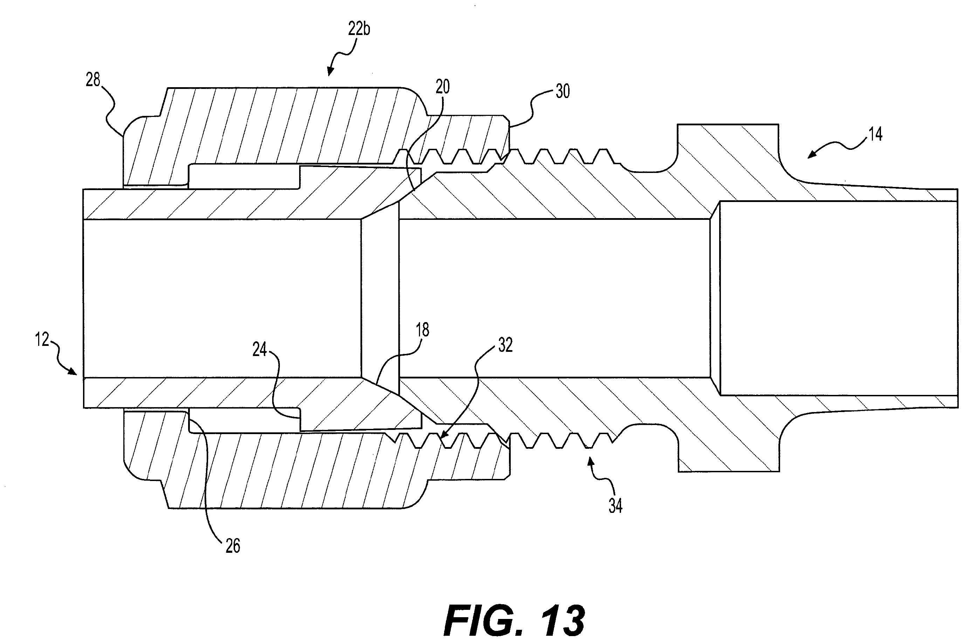

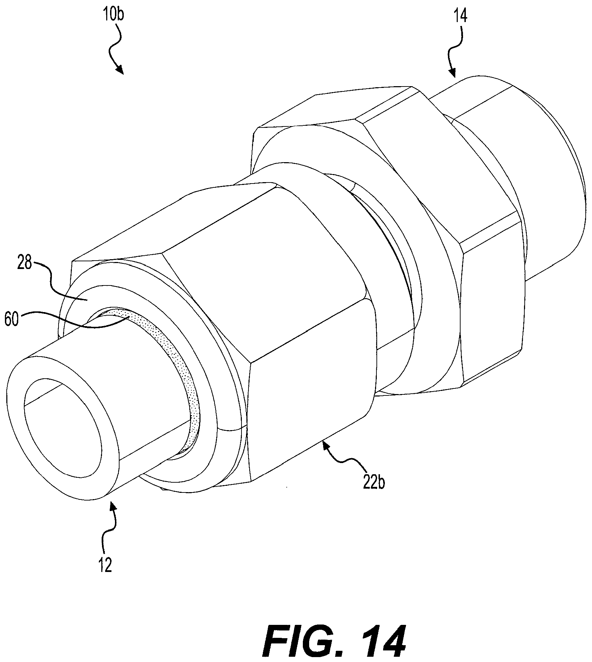

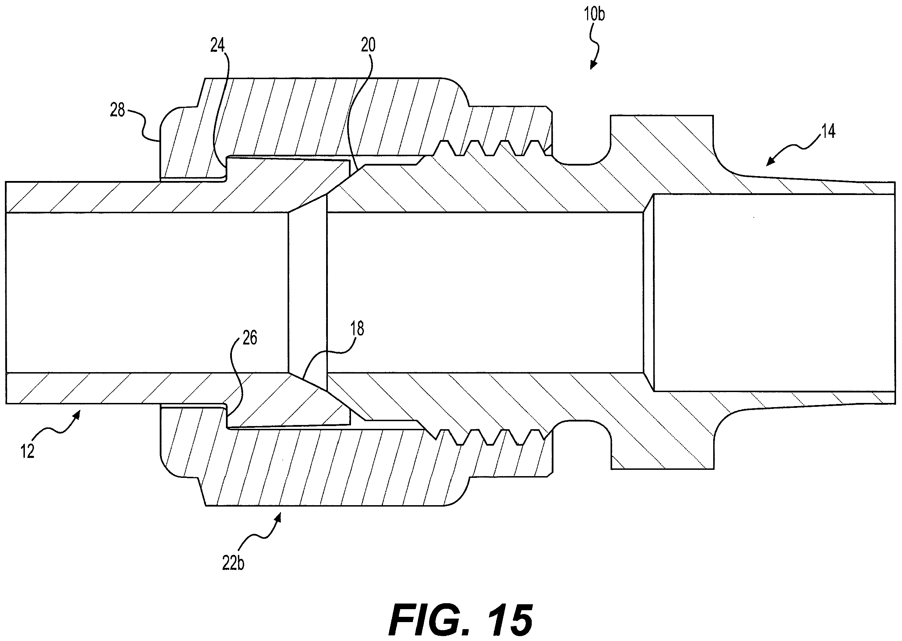

Les figures 11 à 15 schématisent un troisième mode de réalisation d'un raccord étanche aux fluides 10b dans lequel une indication visuelle est fournie lorsque l'accessoire 10b est dans l'état totalement serré. Dans ce mode de réalisation, l'indicateur visuel comprend un marqueur discret 60 disposé sur la surface circonférentielle externe du premier conduit 12 (représentée par la zone en pointillés). Le marqueur 60 est positionné axialement le long du premier conduit 12 de telle sorte que le marqueur devient visible lorsqu'il est vu depuis l'extérieur de l'écrou 22b lorsque l'accessoire 10b atteint l'état totalement serré. Le marqueur peut comprendre une couleur contrastée ou un autre effet visuel convenant pour faciliter une observation aisée du marqueur dans l'état totalement serré du raccord 10b.

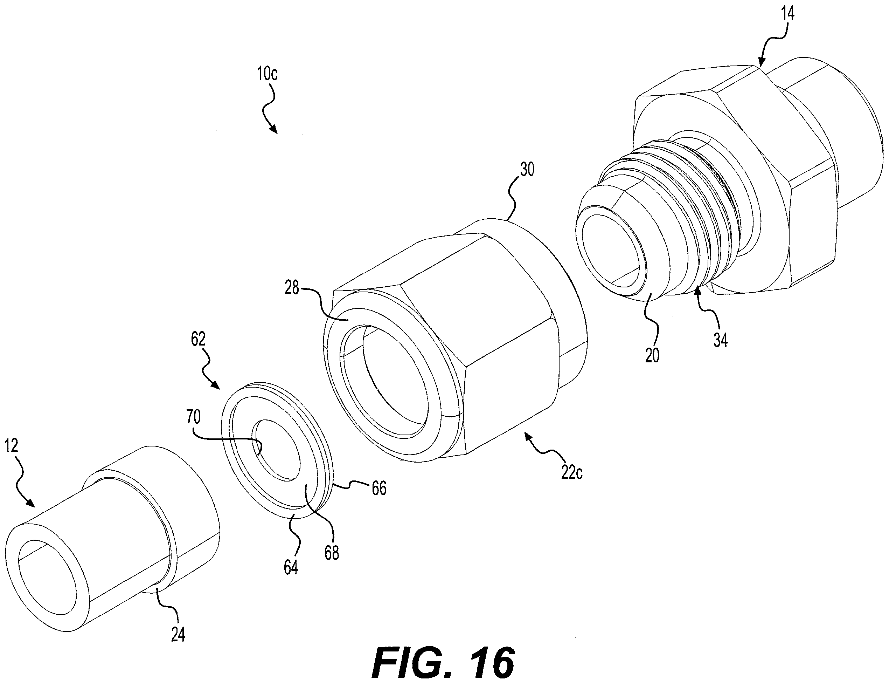

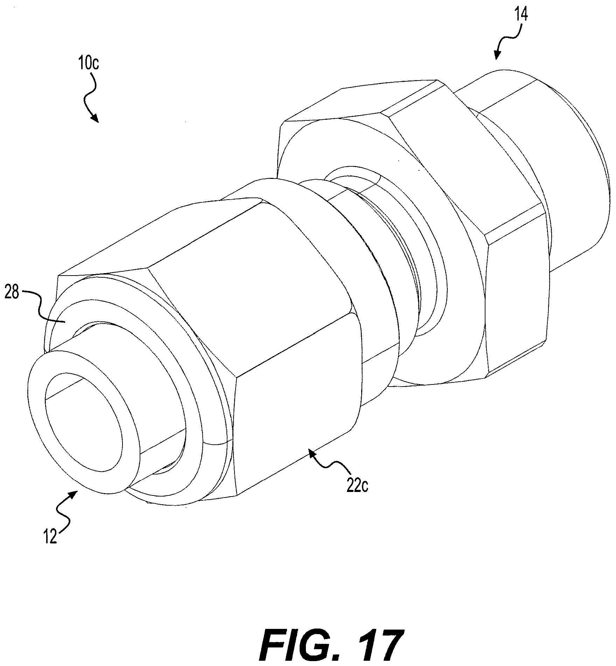

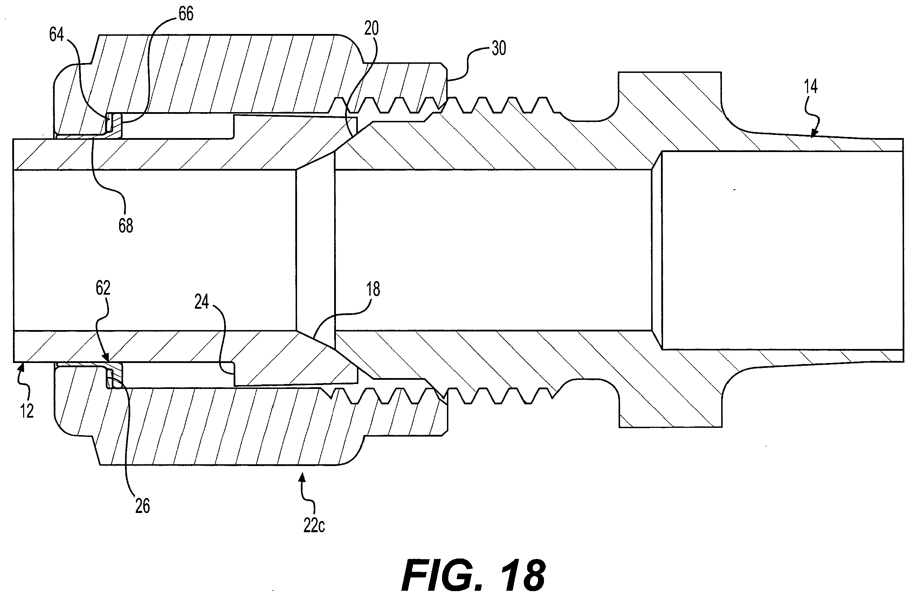

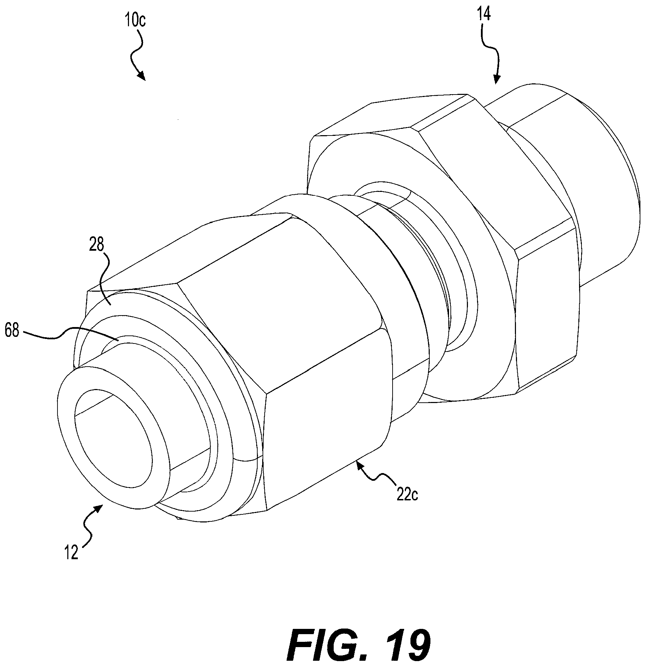

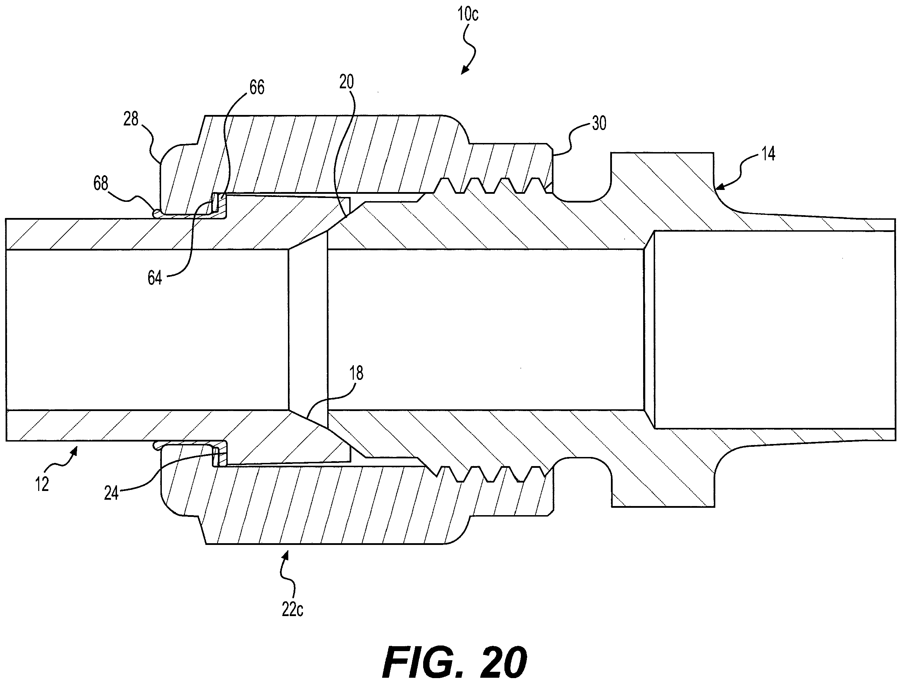

En référence à présent aux figures 16 à 20, un quatrième mode de réalisation d'un exemple d'accessoire 10c en conformité avec les principes de la présente divulgation est décrit. Dans ce mode de réalisation, l'indicateur visuel 62 comprend une bague annulaire 64 reçue au sein de l'intérieur de l'écrou 22c, et configurée pour mettre en prise l'épaulement intérieur 26 à proximité de la première extrémité 28 de l'écrou 22c. L'indicateur visuel 62 inclut en outre une portion d'indicateur élastomère 66 disposée sur la bague annulaire 64 et ayant une portion centrale 68 s'étendant radialement vers l'intérieur de la bague annulaire 64. La portion d'indicateur élastomère 66 définit une ouverture située centralement 70 à travers l'indicateur visuel 62 pour recevoir le premier conduit 12 au travers pendant un assemblage du raccord 10c. Dans l'état installé, la portion centrale 68 devient disposée entre le premier conduit 12 et l'écrou 22c dans un premier état de l'indicateur visuel, comme schématisé sur les figures 17 et 18. A mesure que l'écrou 22c est vissé par filet sur le deuxième conduit 14, l'épaulement 24 sur le premier conduit 12 met en prise et commence à comprimer la portion d'indicateur élastomère 66 moyennant quoi la portion centrale 68 est forcée dans une direction axiale vers la première extrémité distale 28 de l'écrou 22c jusqu'à ce que l'indicateur élastomère devienne visible depuis l'extérieur de l'écrou 22c dans un deuxième état de l'indicateur visuel 62, comme schématisé sur les figures 19 et 20, lorsque l'accessoire 10c est dans l'état totalement serré.

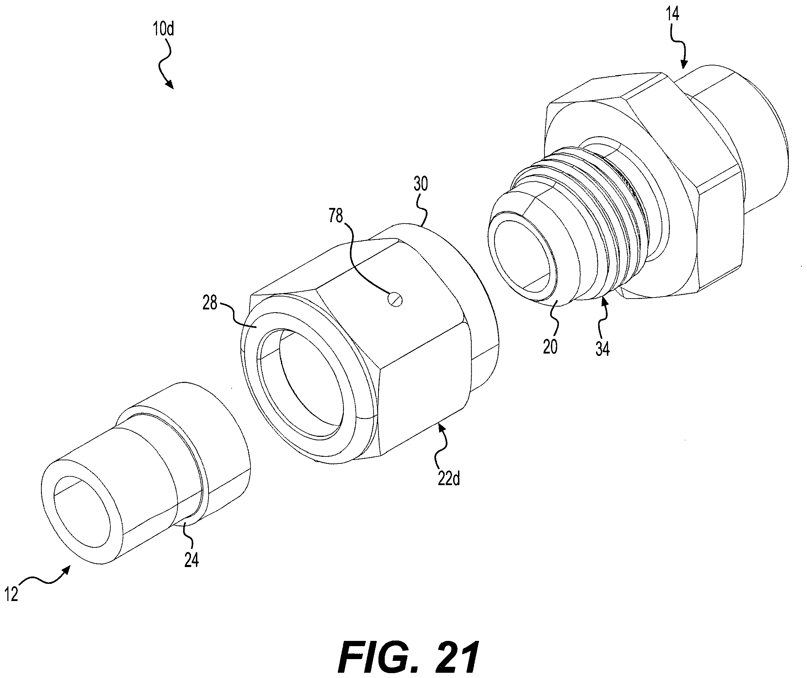

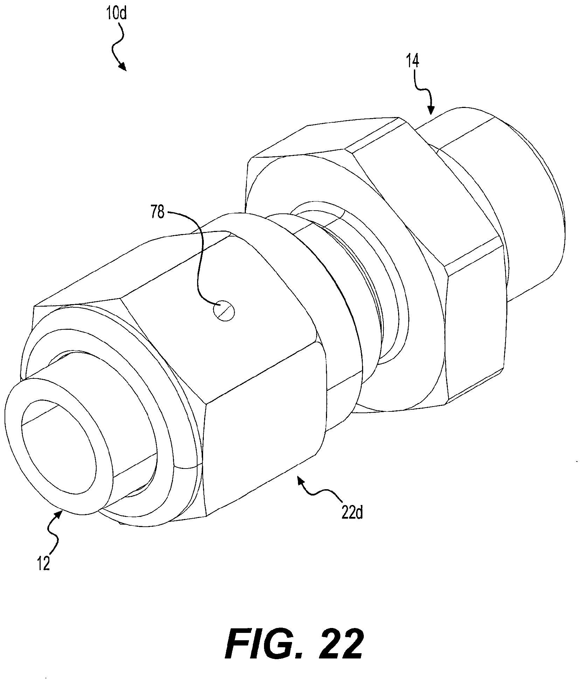

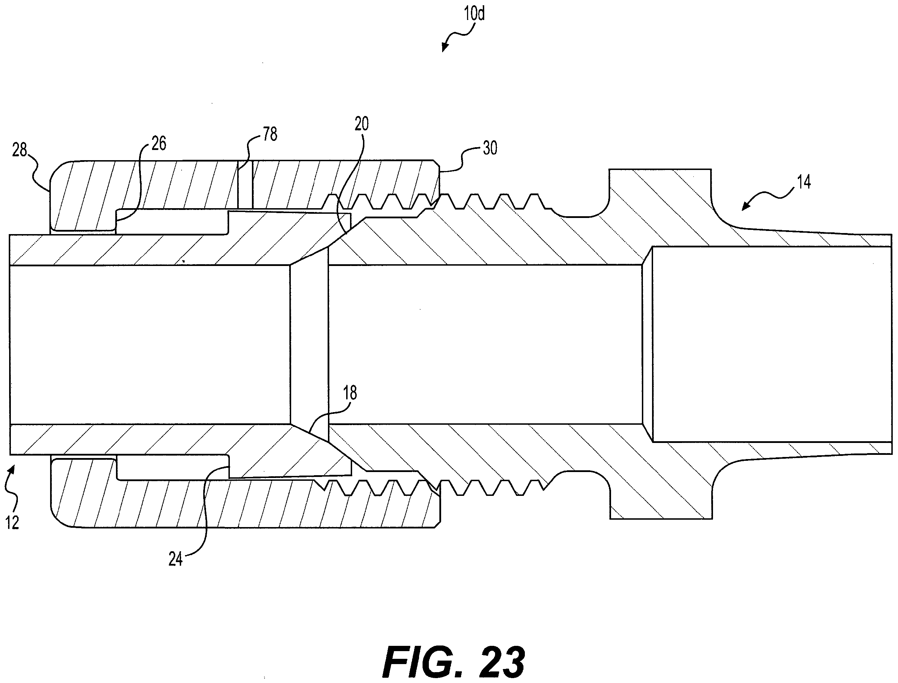

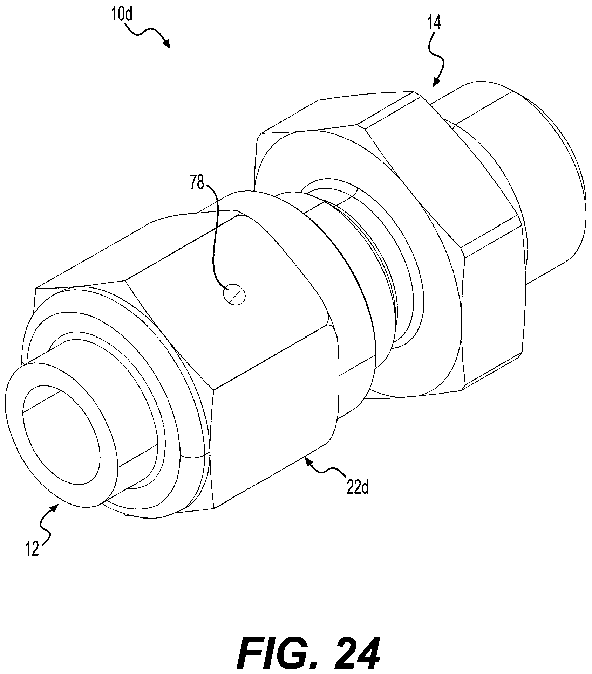

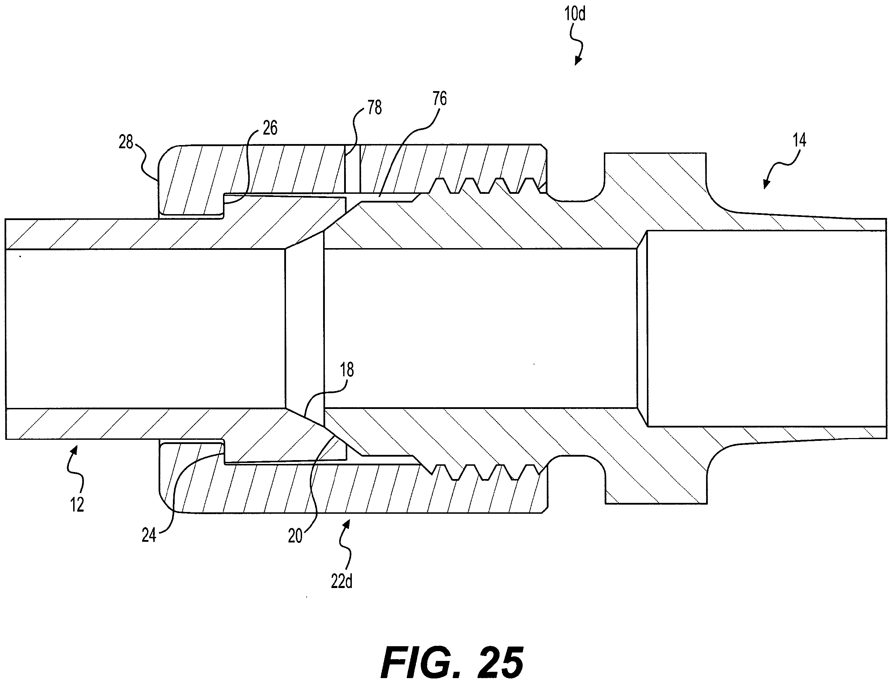

Les figures 21 à 25 schématisent un cinquième exemple de mode de réalisation d'un raccord étanche aux fluides 10d en conformité avec les principes de la présente divulgation, dans lequel un état totalement serré du raccord 10d peut être aisément déterminée. Dans ce mode de réalisation, les premier et deuxième conduits 12, 14 et l'écrou 22d définissent une chambre intérieure 76 entre la surface interne de l'écrou 22d et l'intersection des premier et deuxième conduits 12, 14 lorsque l'accessoire 10d est dans l'état totalement serré de l'ensemble, comme schématisé sur la figure 25. Au moins un passage s'étendant radialement 78 est formé à travers l'écrou 22d, entre la surface externe et la surface interne, pour assurer une communication fluidique avec la chambre intérieure 76 au moins dans l'état totalement serré du raccord 10d. Le passage 78 peut être couplé à une source de pression positive ou négative (vide), et la pression de la chambre intérieure 76 peut être surveillée pour déterminer si la pression de la chambre intérieure 76 est en cours de changement. Lorsque la pression de la chambre intérieure 76 ne change pas, cela indique un joint correct entre les surfaces des premier et deuxième conduits 12, 14 et l'écrou 22d, indiquant ainsi que l'accessoire 10d est totalement serré. Dans le mode de réalisation montré, un seul passage 78 est ménagé dans l'écrou 22d. Il convient de comprendre, toutefois, que l'écrou 22d peut en variante inclure plus d'un passage 78 communiquant avec la chambre intérieure 76. Dans des modes de réalisation ayant plus d'un passage 78 communiquant avec la chambre intérieure 76, l'écrou 22d peut inclure des composants associés aux passages 78 qui assurent une fonctionnalité de type « soupape de sûreté » pour faciliter une pressurisation de la chambre intérieure 76 à travers uniquement l'un des passages 78. En variante, un équipement de pressurisation et de surveillance de la chambre intérieure 76 peut inclure des composants d'étanchement qui mettent en prise et étanchent tous les passages 78 à travers l'écrou 22d sauf un.

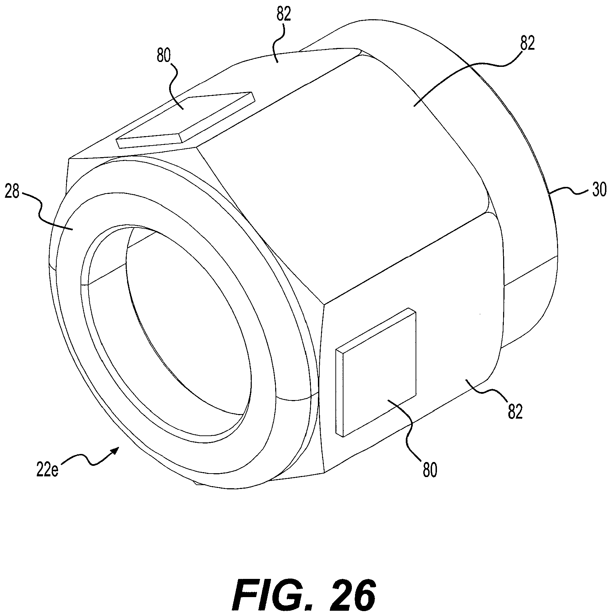

Les figures 26 à 30 schématisent des exemples additionnels de modes de réalisation d'écrous en conformité avec les principes de la présente divulgation. Dans ces modes de réalisation, les écrous sont instrumentés avec une ou plusieurs jauges de déformation configurées pour capter une déformation dans les écrous résultant des forces associées à un état serré des raccords. Dans un mode de réalisation schématisé sur la figure 26, une ou plusieurs jauges de déformation 80 peuvent être appliquées à des surfaces circonférentielles externes 82 de l'écrou 22e pour capter la contrainte endurée par l'écrou 22e. En variante, des jauges de déformation peuvent être appliquées à diverses autres surfaces de l'écrou 22e convenant pour capter la déformation endurée par l'écrou 22e et associée à un état serré du raccord qui utilise l'écrou 22e. Dans un mode de réalisation, trois ou plus de trois jauges de déformation 80 sont appliquées à l'écrou 22e pour détecter la déformation subie par l'écrou 22e. Il convient de comprendre que divers autres nombres de jauges de déformation 80 peuvent en variante être utilisés pour faciliter le captage de la déformation dans l'écrou 22e.

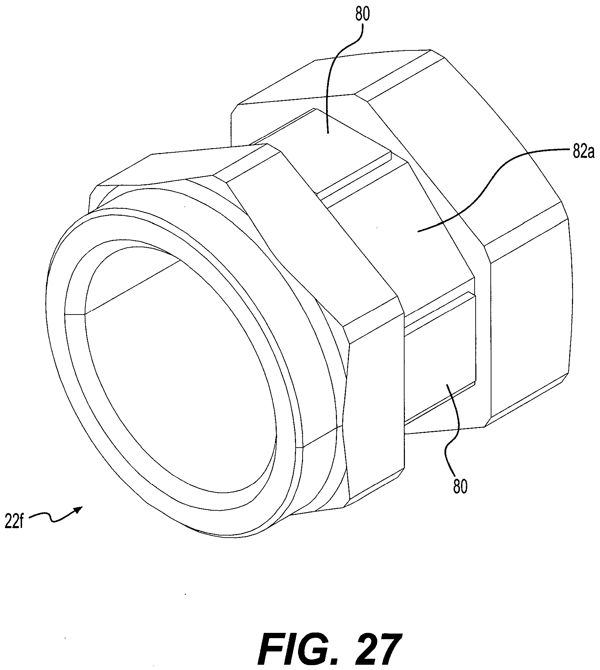

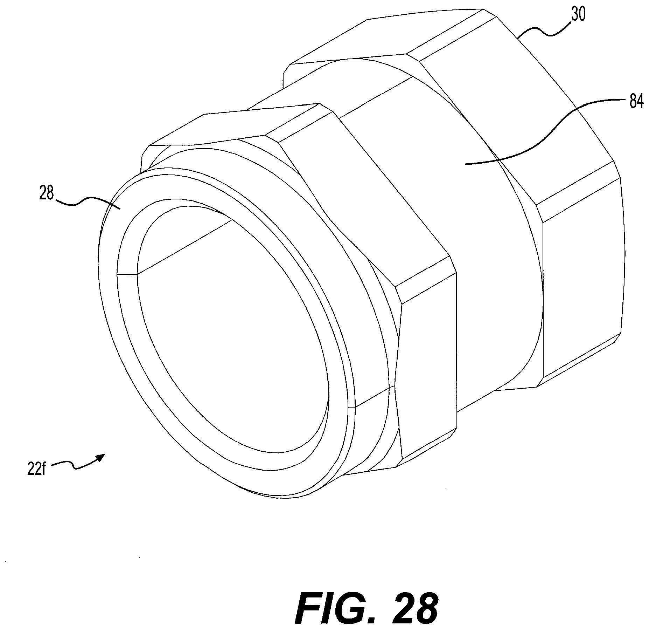

La figure 27 schématise un autre exemple de mode de réalisation d'un écrou 22f dans lequel des jauges de déformation 80 sont disposées sur une portion de diamètre réduit 82a de l'écrou 22f afin de protéger les jauges de déformation 80 vis-à-vis d'un contact avec des outils qui peuvent être utilisés pour serrer l'écrou 22f dans l'accessoire. Les jauges de déformation 80 peuvent être couvertes par un élément protecteur 84 adéquat s'étendant autour de la portion de diamètre réduit 82a et qui forme une barrière entre les jauges de déformation 80 et tout outil ou autre objet qui peut venir en contact avec l'écrou 22f, comme schématisé sur la figure 28.

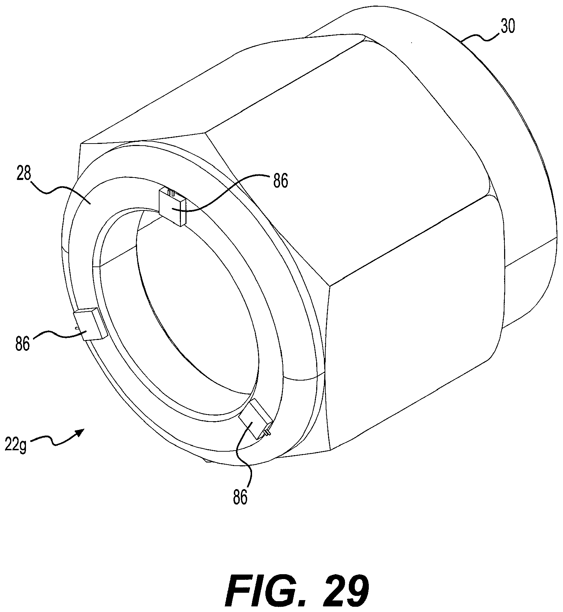

Dans le mode de réalisation montré sur la figure 29, une ou plusieurs jauges de déformation 86 peuvent être disposées sur la première extrémité distale de l'écrou 22g pour capter la déformation endurée par l'écrou 22g et associée à l'état serré du raccord.

Des exemples d'écrous en conformité avec les modes de réalisation divulgués sur les figures 26 à 29 peuvent en outre inclure une circuiterie de communication configurée pour communiquer des signaux provenant des jauges de déformation relatifs à une contrainte endurée par les écrous. Dans un mode de réalisation, la circuiterie de communication peut se présenter sous la forme de dispositifs RFID associés aux jauges de déformation. Un dispositif de lecture (non montré) peut être utilisé avec la circuiterie de communication, comme des étiquettes RFID, par exemple, pour recevoir des signaux de la circuiterie de communication. Les signaux peuvent ensuite être traités pour vérifier si les écrous sont correctement serrés. Des données historiques relatives aux signaux peuvent être stockées et suivies pour faciliter la détermination d'un entretien ou d'autres mesures qui peuvent être souhaitées en rapport à des écrous individuels ou des groupes d'écrous.

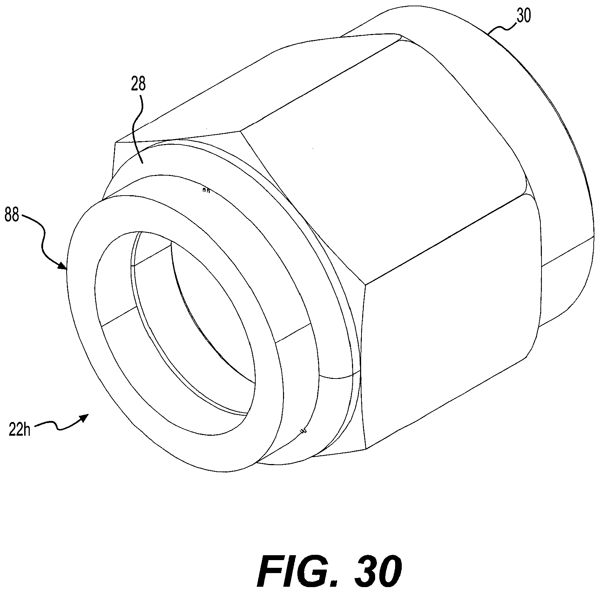

La figure 30 illustre un autre exemple de mode de réalisation d'un écrou 22h dans lequel une capsule 88 est disposée sur la première extrémité 28 de l'écrou 22h et qui comprend des jauges de déformation et/ou une autre circuiterie adaptée pour faciliter le captage de la déformation endurée par l'écrou 22h et associée à un état serré de l'écrou 22h dans un raccord étanche aux fluides. La capsule peut être pourvue de l'écrou 22h, ou la capsule peut être configurée pour faciliter l'actualisation d'écrous existants pour capter la déformation associée à un état serré comme décrit ci-dessus.

Dans des exemples additionnels de modes de réalisation en conformité avec les principes de la présente divulgation, l'une quelconque des configurations d'écrous évoquées ci-dessus peut en outre inclure un ou plusieurs composants qui facilitent le raccordement par filet de l'écrou avec les filets correspondants 34 sur le deuxième conduit 14. Dans un mode de réalisation, les écrous peuvent être traités de telle sorte que le premier filet incomplet adjacent à la deuxième extrémité distale 30 est enlevé pour faciliter un vissage de l'écrou sur les filets correspondants 34 du deuxième conduit 14 tout en minimisant ou éliminant le potentiel arrachement des filets. Dans un autre mode de réalisation, des écrous en conformité avec la présente divulgation peuvent en outre inclure un passage d'alésage lisse s'étendant vers l'extérieur des filets au niveau de la deuxième extrémité distale 30 de l'écrou. Le passage facilite un alignement adéquat des filets intérieurs de l'écrou avec les filets correspondants 34 sur le deuxième conduit 14 pendant une initiation du vissage de l'écrou conjointement avec le deuxième conduit de sorte que le potentiel arrachement des filets est minimisé ou éliminé. Le fait d'éviter l'arrachement des filets entre l'écrou et le deuxième conduit améliore l'intégrité d'étanchement du raccordement étanche aux fluides.

Alors que la présente invention a été illustrée par une description de divers modes de réalisation, et alors que ces modes de réalisation ont été décrits avec de considérables détails, l'intention n'est pas de restreindre ou en aucune manière de limiter la portée des revendications annexées à de tels détails. Des avantages et modifications additionnels apparaîtront aisément à l'homme du métier. L'invention dans ses plus larges aspects n'est donc pas limitée aux détails, appareil et procédé représentatifs, et exemple illustratif spécifiques montrés et décrits. En conséquence, on peut s'écarter de tels détails sans s'écarter de la portée des revendications.

## Revendications

1. Ensemble écrou à utiliser dans un ensemble étanche aux fluides, ledit ensemble étanche aux fluides comprenant un premier conduit (12) ayant une première extrémité distale (16) et un deuxième conduit (14) ayant une première portion filetée (34), l'ensemble écrou comprenant :
un écrou ayant, en particulier étant, un corps d'écrou (22 ; 22a ; 22b ; 22c), configuré pour être reçu sur la première extrémité du premier conduit et ayant une deuxième portion filetée (32) pouvant être mise en prise avec la première portion filetée du deuxième conduit ;
un indicateur visuel (40 ; 50 ; 60 ; 62), en particulier couplé à l'écrou, l'indicateur visuel ayant un premier état dans lequel une portion indicatrice de l'indicateur visuel est hors de portée de vue par rapport à l'extérieur de l'écrou, et un deuxième état dans lequel la portion indicatrice de l'indicateur visuel est visible de l'extérieur de l'écrou lorsque l'ensemble étanche aux fluides est totalement serré ,
**caractérisé en ce que**
a) l'indicateur visuel comprend au moins une patte (44 ; 54) disposée au sein de l'écrou, la patte étant déplacée par une mise en prise avec le premier conduit entre les premier et deuxième états, dans lequel l'au moins une patte est déviée dans le deuxième état par mise en prise avec le premier conduit lorsque l'ensemble étanche aux fluides est totalement serré, et/ou dans lequel l'au moins une patte a une forme de L cintré ayant une première portion avec une extrémité distale qui met en prise le premier conduit, ou
b) l'indicateur visuel comprend :
une bague annulaire (64) reçue au sein de l'écrou ;
une portion d'indicateur élastomère (66) disposée sur la bague annulaire et ayant une portion centrale (68) s'étendant radialement vers l'intérieur de la bague ;
la portion centrale étant disposée entre le premier conduit et l'écrou dans un état installée de l'ensemble ;
la portion d'indicateur élastomère étant comprimé par le premier conduit dans le deuxième état de telle sorte que la portion centrale est forcée vers une position visible depuis l'extérieur de l'écrou.

2. Ensemble écrou selon la revendication 1, comprenant en outre au moins une fente (46 ; 56) formée dans l'intérieur de l'écrou et s'étendant suivant une direction axiale de celle-ci, en particulier pour recevoir l'au moins une patte.

3. Ensemble écrou selon l'une quelconque des revendications 1 et 2, dans lequel la patte est configurée pour faciliter une perception visuelle dans le deuxième état.

4. Ensemble étanche aux fluides, comprenant :
un premier conduit (12) ayant une première extrémité distale (16) ;
un deuxième conduit (14) ayant une première portion filetée (34) ;
un ensemble écrou selon l'une des revendications 1 à 3, l'écrou étant configuré pour être reçu sur la première extrémité du premier conduit et pour être mis en prise avec la première portion filetée du deuxième conduit.

5. Procédé d'inspection d'un ensemble étanche aux fluides, l'ensemble étanche aux fluides comprenant un premier conduit (12), un deuxième conduit (14), et un écrou couplé aux premier et deuxième conduits,
dans lequel
l'ensemble étanche aux fluides comprend un ensemble écrou selon l'une quelconque des revendications 1 à 3 ; ou
l'ensemble étanche aux fluides est un ensemble étanche aux fluides selon la revendication 4,
le procédé comprenant :
la visualisation d'au moins une portion de l'extérieur de l'ensemble étanche aux fluides ; et
l'identification de la présence ou de l'absence de l'indicateur visuel.

## Patentansprüche

1. Mutteranordnung zur Verwendung in einer fluiddichten Anordnung, wobei die fluiddichte Anordnung eine erste Leitung (12) aufweist, die ein erstes distales Ende (16) hat, und eine zweite Leitung (14) aufweist, die einen ersten mit einem Gewinde versehenen Abschnitt (34) hat, wobei die Mutteranordnung Folgendes aufweist:
eine Mutter, die einen Mutterkörper (22 ; 22a ; 22b ; 22c) aufweist, insbesondere ein Mutterkörper (22 ; 22a ; 22b ; 22c) ist, der so konfiguriert ist, dass er auf dem ersten Ende der ersten Leitung aufgenommen werden kann, und der einen zweiten mit einem Gewinde versehenen Abschnitt (32) aufweist, der mit dem ersten mit einem Gewinde versehenen Abschnitt der zweiten Leitung in Eingriff gebracht werden kann ;
eine visuelle Anzeige (40 ; 50 ; 60 ; 62), insbesondere eine visuelle Anzeige (40 ; 50 ; 60 ; 62), die mit der Mutter gekoppelt ist, wobei die visuelle Anzeige einen ersten Zustand aufweist, in dem ein Anzeigeabschnitt der visuellen Anzeige außer Sichtweite von der Außenseite der Mutter ist, und einen zweiten Zustand, in dem der Anzeigeabschnitt der visuellen Anzeige von der Außenseite der Mutter sichtbar ist, wenn die fluiddichte Anordnung vollständig festgezogen ist,
**dadurch gekennzeichnet, dass**
a) der visuelle Indikator wenigstens ein längliches Element (44 ; 54) aufweist, das innerhalb der Mutter angeordnet ist, wobei das längliche Element dadurch zwischen dem ersten und dem zweiten Zustand verlagert wird, dass sie mit der ersten Leitung in Eingriff kommt, wobei das wenigstens eine längliche Element dadurch in den zweiten Zustand deformiert wird, dass sie mit der ersten Leitung in Eingriff kommt, wenn die fluiddichte Anordnung vollständig festgezogen ist, und / oder wobei das wenigstens eine längliche Element eine Form eines gebogenen L hat, die einen ersten Abschnitt mit einem distalen Ende aufweist, das mit der ersten Leitung in Eingriff kommt,
oder dass
b) der visuelle Indikator Folgendes aufweist:
einen ringförmigen Ring (64), der innerhalb der Mutter aufgenommen ist;
einen elastomeren Indikatorabschnitt (66) der auf dem ringförmigen Ring angeordnet ist und der einen zentralen Abschnitt (68) aufweist, der sich von dem Ring radial nach innen erstreckt;
wobei der zentrale Abschnitt zwischen der ersten Leitung und der Mutter angeordnet ist, wenn sich die Anordnung in einem installierten Zustand befindet;
wobei der elastomere Indikatorabschnitt durch die erste Leitung so in den zweiten Zustand gepresst wird, dass der zentrale Abschnitt in eine Position gedrückt wird, in der er von der Außenseite der Mutter sichtbar ist.

2. Mutteranordnung nach Anspruch 1, wobei die Mutteranordnung ferner wenigstens einen Schlitz (46 ; 56) aufweist, der in dem Inneren der Mutter ausgebildet ist und der sich entlang einer axialen Richtung derselben erstreckt, insbesondere zur Aufnahme des wenigstens einen länglichen Elements.

3. Mutteranordnung nach einem der Ansprüche 1 oder 2, wobei das längliche Element in einer Weise gestaltet ist, dass es in dem zweiten Zustand eine visuelle Wahrnehmung erleichtert.

4. Fluiddichte Anordnung, wobei die fluiddichte Anordnung Folgendes aufweist:
eine erste Leitung (12), die ein erstes distales Ende (16) hat;
eine zweite Leitung (14), die einen ersten mit einem Gewinde versehenen Abschnitt (34) hat;
eine Mutteranordnung nach einem der Ansprüche 1 bis 3, wobei die Mutter in einer Weise konfiguriert ist, dass sie auf dem ersten Ende der ersten Leitung aufgenommen werden kann und dass sie mit dem ersten mit einem Gewinde versehenen Abschnitt der zweiten Leitung in Eingriff gebracht werden kann.

5. Verfahren zum Überprüfen einer fluiddichten Anordnung, wobei die fluiddichte Anordnung eine erste Leitung (12), eine zweite Leitung (14) und eine Mutter aufweist, die mit der ersten und der zweiten Leitung gekoppelt ist,
wobei
die fluiddichte Anordnung eine Mutteranordnung nach einem der Ansprüche 1 bis 3 aufweist; oder
die fluiddichte Anordnung eine fluiddichte Anordnung nach Anspruch 4 ist,
wobei das Verfahren Folgendes aufweist:
das Betrachten wenigstens eines Teils der Außenseite der fluiddichten Anordnung ; und
das Identifizieren, ob der visuelle Indikator vorhanden ist oder ob er nicht vorhanden ist.

## Claims

1. A nut assembly for use in a fluid tight assembly, wherein said fluid tight assembly comprises a first conduit (12) having a first distal end (16) and a second conduit (14) having a first threaded portion (34), wherein the nut assembly comprises :
a nut which has a nut body (22 ; 22a ; 22b ; 22c), in particular a nut which consists of a nut body (22 ; 22a ; 22b ; 22c), wherein the nut is configured to be received on the first end of the first conduit and wherein the nut has a second threaded portion (32) which can be caused to be in engagement with the first threaded portion of the second conduit;
a visual indicator (40 ; 50 ; 60 ; 62), in particular coupled to the nut, wherein the visual indicator has a first state in which an indicator portion of the visual indicator is out of view from the exterior of the nut, and a second state in which the indicator portion of the visual indicator is visible from the exterior of the nut when the fluid tight assembly is fully tightened ,
**characterised in that**
a) the visual indicator comprises at least one leg (44 ; 54) disposed within the nut, wherein the leg is transferred between the first state and the second state by an engagement with the first conduit, wherein the at least one leg is deflected into the second state by engagement with the first conduit when the fluid tight assembly is fully tightened, and I or wherein the at least one leg has the shape of a bent L having a first portion with a distal end that engages the first conduit,
or **in that**
b) the visual indicator comprises :
an annular ring (64) which is received within the nut;
an elastomeric indicator portion (66) which is disposed on the annular ring and which has a central portion (68) which extends radially inwardly with respect to the ring ;
wherein the central portion is disposed between the first conduit and the nut in an installed state of the assembly ; and
wherein the elastomeric indicator portion is compressed by the first conduit in the second state in such a way that the central portion is forced towards a position in which it is visible from the exterior of the nut.

2. The nut assembly as claimed in claim 1, further comprising at least one slot (46 ; 56) which is formed in the interior of the nut and which extends along an axial direction thereof, in particular for receiving the at least one leg.

3. The nut assembly as claimed in any one of claims 1 and 2, wherein the leg is configured to facilitate a visual perception in the second state.

4. A fluid tight assembly, comprising :
a first conduit (12) which has a first distal end (16) ;
a second conduit (14) which has a first threaded portion (34) ;
a nut assembly as claimed in any one of claims 1 to 3, wherein the nut is configured to be received on the first end of the first conduit and to be caused to be in engagement with the first threaded portion of the second conduit.

5. A method of inspecting a fluid tight assembly, wherein the fluid tight assembly comprises a first conduit (12), a second conduit (14), and a nut which is coupled to the first and second conduits,
wherein
the fluid tight assembly comprises a nut assembly as claimed in any one of claims 1 to 3 ; or
the fluid tight assembly is a fluid tight assembly as claimed in claim 4 ,
wherein the method comprises :
viewing at least a portion of the exterior of the fluid tight assembly ; and
identification of the presence or the absence of the visual indicator.
